# EUROPEAN PATENT SPECIFICATION

(11) **EP 0 189 912 B1**
(45) Date of publication and mention of the grant of the patent: **19.05.1993**
(21) Application number: 86101163.3
(22) Date of filing: 29.01.1986
(51) Int. Cl.: G06F 7/50

(54) **Fast BCD/binary adder**
Schneller BCD/binär-Addierer
Additionneur rapide BCD/binaire

(30) Priority: 31.01.1985 US 696831
(43) Date of publication of application: 06.08.1986
(73) Proprietor: UNISYS CORPORATION, Blue Bell, PA 19424-0001 (US)
(72) Inventor: Flora, Laurence Paul, Covina California 91724 (US)
(74) Representative: EGLI-EUROPEAN PATENT ATTORNEYS

(56) References cited:
- US-A- 3 711 693
- US-A- 3 958 112
- US-A- 4 138 731
- US-A- 4 441 159

## Description

### BACKGROUND OF THE INVENTION

This invention generally relates to arithmetic logic means for performing binary or BCD operations on multi-bit input operands in a digital data processing system.

In a digital data processing system, one of the most critical delay paths affecting overall processing speed is the path through the arithmetic/logic unit (ALU). The primary reasons are:
(1) the ALU is involved in most data processing operations,
(2) an ALU typically involves a complex logical function requiring large numbers of gates, and
(3) the current trend to larger data widths significantly increases carry propagate times even using look-ahead carry circuitry.
Furthermore, where an ALU is additionally required to provide both binary and BCD operation, an additional increase in the delay path is to be expected because of the additional gates that would be required to implement the BCD logical functions.

For example, U.S. Patent Nos. 4,172,288 and 3,958,112 illustrate known ways of providing BCD operation for an ALU. In Pat. No. 4,172,288, two BCD operands are added by first adding the operands as if they were pure binary numbers to produce an intermediate result. If this intermediate result is greater than nine, a correction value of six is added to obtain the correct BCD result. In U.S. Pat. No. 3,958,112, a reverse approach is employed in which the correction value of six is always added to one of the BCD operands before the operands are added as if they were pure binary numbers. If the intermediate result obtained from this binary addition is less than sixteen, then the correction value of six is subtracted from the intermediate result to obtain the correct BCD result. Although the approaches disclosed in these patents implement the BCD addition, they employ additional gates in a manner which significantly increases the delay of the path through the ALU.

The document US-A-4 441 159 presents a digital adder circuit for binary-coded numbers of radix other than a power of two and therefore provides arithmetic-logic means for selectively performing binary or BCD operations on one digit operand, a plurality of multiplexers (which correspond to the digital adders in the present application) which combine the operand signals with a mode signal indicating whether the operation is a binary or a BCD operation, produce propagate and generate signals and feed forward said propagate and generate signals to look-ahead carry circuit means forming an intermediate result. In the case of a BCD operation the intermediate result can be adjusted by subtracting a correction value in certain cases.

### SUMMARY OF THE INVENTION

Starting from the prior art arithmetic logic means, the invention is based on the object of providing an arithmetic logic means of the above mentioned type having a significantly reduced operation time for performing the arithmetic operations and a relatively simple circuit design.
This object will be achieved by arithmetic logic means for selectively performing binary or BCD operations on this multidigit operands according to the features of patent claim 1.

More particularly, the present invention is directed to improved electrical circuitry for selectively performing BCD or binary arithmetic operations in a digital data processing system.

A more specific object of the invention in accordance with the foregoing object is to selectively provide for the performance of either binary or BCD arithmetic operations in a manner which significantly reduces the time required for the performance of these arithmetic operations.

Another object of the invention in accordance with one or more of the foregoing objects is to provide an ALU which merges one or more stages into a common logic structure in a manner so that the time required for performance of the overall arithmetic operations is significantly reduced.

An additional object of the invention is to provide circuitry in accordance with the foregoing objects which is relatively simple and economical.

In a particular preferred embodiment of the invention, the basic approach employed for selectively performing either BCD or binary arithmetic operations is similar to that employed in the aforementioned Patent Nos. 3,958,112 and 4,441,159 -- whereby, for BCD operation, a correction value (+6 for the case of addition) is caused to be added to one of the operands and a correction value conditionally subtracted from the result where necessary to give a proper BCD output value. However, this preferred embodiment differs from the embodiments disclosed in these aforementioned patents by merging particular stages into common logical structures in a manner such that the overall time required for the arithmetic operation is significantly reduced. More particularly, input logical circuits are provided which during BCD operation are able to provide for addition of an appropriate correction value concurrently with the addition of the input operands so as to produce propagate and generate signals in significantly less time than if the two operations were performed serially. Most importantly, however, unlike in the embodiment disclosed in Patent No. 4,441,159, this input logical circuit provides for the production of propagate and generate signals which automatically take into account any inter-bit carries (or borrows in the case of subtraction) that may be produced as a result of the addition (or subtraction) of the correction value with the input operands, thereby making it possible to avoid the complexity and delay in the look-ahead carry (or borrow) operation which would otherwise be required to take such inter-bit carries (or borrows) into account.

In addition, this preferred embodiment achieves further reductions in the time required for selectively performing either BCD or binary arithmetic operations. This is achieved by providing for the concurrent production of two conditional sums (one sum assuming the presence of a carry and the other assuming the absence of a carry) in parallel with look-ahead carry operations, and then providing an output selection circuit which, during BCD operation, merges the selection operation for selecting the correct conditional sum (in response to the look-ahead carry produced) with the conditional subtraction operation for subtracting the correction value where required to obtain a proper BCD result, this merging being accomplished in significantly less time than as would otherwise be required.

Still further, the above described preferred embodiment can also accommodate both addition and subtraction operations as well as other types of logical operations.

The specific nature of the invention as well as other objects, features, advantages and uses thereof will become evident from the following detailed description of a particular improved embodiment taken in conjunction with the accompanying drawings.

### BRIEF DESCRIPTION OF THE DRAWINGS

FIG. 1 is an electrical block diagram illustrating the overall structure of a particular preferred embodiment in accordance with the invention.

FIG. 2 is an electrical block diagram illustrating a particular preferred implementation of the digit adder 10 in FIG. 1.

FIGS. 3-6 are logic diagrams illustrating particular preferred embodiments of the input logic circuits 30, 31, 32 and 33 in FIG. 2.

FIGS. 7-10 are logic diagrams illustrating particular preferred embodiments of the conditional sum circuits 40, 41, 42 and 43 in FIG. 2.

FIG. 11 is a logic diagram illustrating a preferred implementation of the digit propagate/generate circuit 50 in FIG. 2.

FIG. 12 is a logic diagram illustrating a particular preferred implementation of the look-ahead carry circuit 30 in FIG. 1.

FIGS. 13-16 are logic diagrams illustrating a particular preferred implementation of the selection circuit 20 shown in FIG. 1.

Like characters and numbers refer to like elements throughout the figures of the drawings.

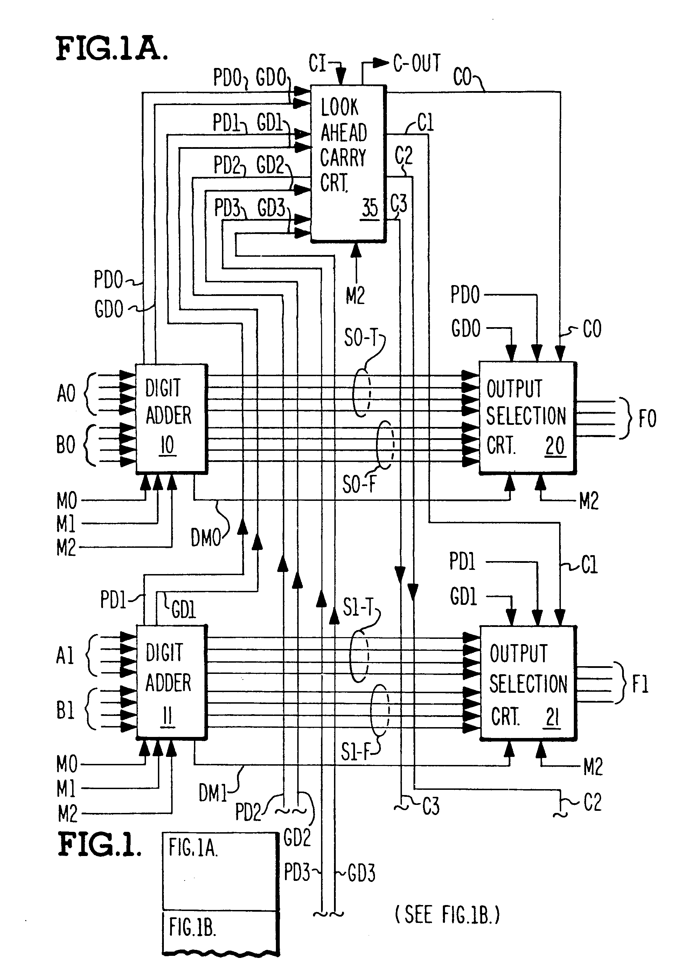

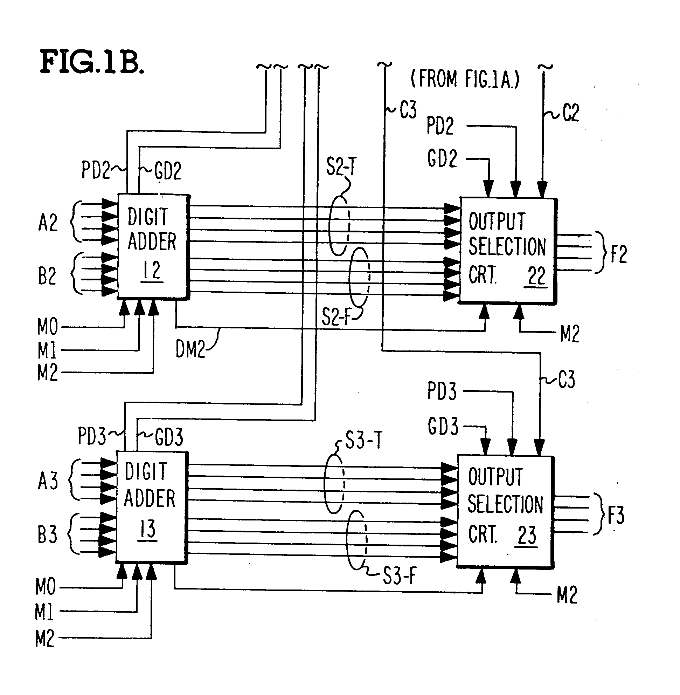

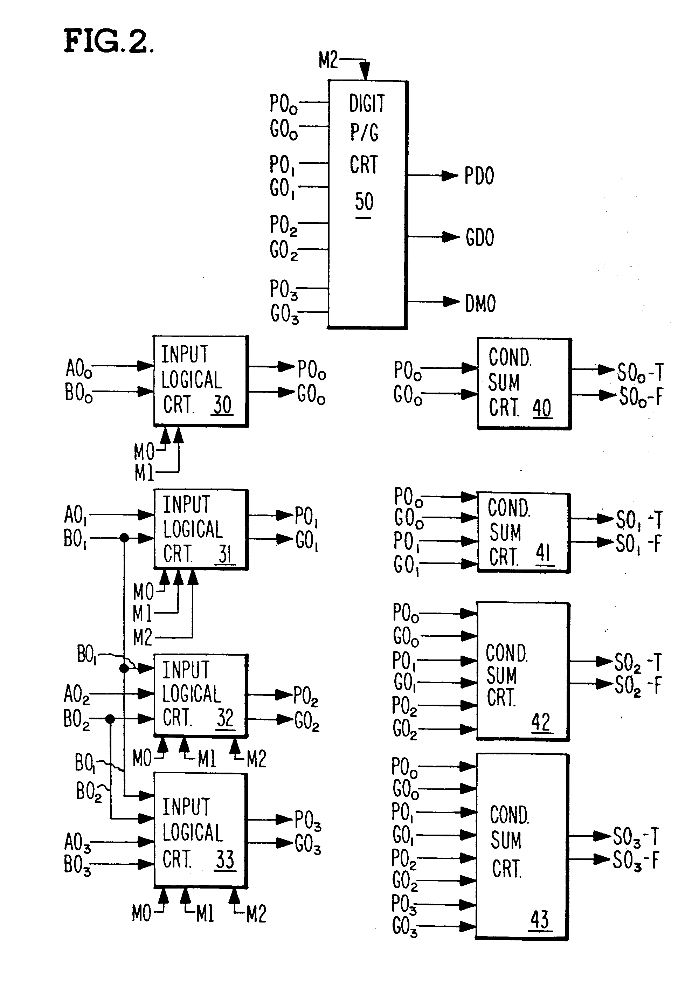

Reference will initially be made to FIG. 1, which is an electrical block diagram illustrating the overall structure of a particular preferred embodiment in accordance with the invention. The structure of FIG. 1 is capable of selectively performing either binary or BCD arithmetic operations (addition and subtraction) on two 4-digit operands A and B having the digits A0, A1, A2, A3 and B0, B1, B2, B3, respectively. As shown in FIG. 1, each of these digits is comprised of 4 bits. Later on herein when particular preferred implementations are considered the bits for A0 and B0 will be designated as A0₀, A0₁, A0₂, A0₃ and B0₀, B0₁, B0₂, B0₃, respectively (for example, see FIG. 2).

As shown in FIG. 1, corresponding digit pairs A0, B0; A1, B1; A2, B2; and A3, B3 of the operands A and B are applied to respective digit adders 10, 11, 12 and 13 along with mode signals M0, M1, M2, and M3 which determine whether binary or BCD operation is to be provided as well as whether addition or subtraction of the operands is to be performed. These digit adders 10, 11, 12 and 13 produce respective pairs of conditional sum output signals S0-T, S0-F; S1-T, S1-F; S2-T, S2-F; and S3-T, S2-F. As shown in FIG. 1, each of these sums comprise 4 bits. Later on, when particular implementations are considered, the bits for the pair of conditional sums SO-T and S0-F will be designated as S0₀-T, S0₁-T, S0₂-T, S0₃-T and S0₀-F, S0₁-F, S0₂-F, S0₃-F, respectively. The "T" sums designate those sums which assume the presence of a carry input, while the "F" sums designate those sums which assume the absence of a carry input. Both the "T" and "F" sums take into account any inter-carry bits which may be produced including those produced by the correction signal during BCD operation. The mode signal M2 determines whether binary or BCD operation is to be performeds, while the mode signals M0 and M1 determine whether addition or subtraction is to be performed. In the particular preferred embodiment being described, these mode signals M0, M1 and M2 provide for selection of operations as follows:

| | |
|---|---|
| M0 = M1 = "0" | Perform A + B |
| M0 = "1", M1 = "0" | Perform A - B |
| M0 = "0", M1 = "1" | Perform B - A |
| M0 = M1 = "1" | Perform 0 - B |

Continuing with the description of the embodiment illustrated in FIG. 1, it will be seen that the pairs of conditional output signals S0-T, S0-F; S1-T, S1-F; S2-T, S2-F; and S3-T, S3-F produced by the respective digit adders 10, 11, 12 and 13 are applied to respective output selection circuits 20, 21, 22 and 23. The digit adders 10, 11, 12 and 13 in FIG. 1 additionally produce respective decimal mode signals DM0, DM1, DM2 and DM3 (for use in the BCD operating mode) and also respective pairs of digit propagate and digit generate signals DD0, GD0; PD1, GD1; PD2, GD2; and PD3, GD3 which are applied to respective ones of the output selection circuits 20, 21, 22 and 23 along with the input carry CI and respective pairs of conditional output signals S0-T, S0-F; S1-T, S1-F; S2-T, S2-F; and S3-T, S3-F. The decimal mode signals DM0, DM1, DM2 and DM3 provide for the selective incorporation of an appropriate correction value in the logic of the selection circuits 20, 21, 22 and 23 during BCD operation (such as, for example, providing for a subtraction of 6 during BCD addition when required to obtain the proper BCD result).

As shown in FIG. 1, the respective pairs of digit propagate and digit generate signals PD0, GD0; PD1, GD1; PD2, GD2; and PD3, GD3 are also applied to look-ahead carry circuitry 35 along with a carry-in signal CI which in response to these applied signals produces respective look-ahead digit carry signals C0, C1, C2 and C3 and a carry-out signal C-OUT. As shown in FIG. 1, the digit carry signals C0, C1, C2 and C3 are applied to respective ones of the output selection circuits 20, 21, 22 and 23.

In response to the signals applied thereto, the output selection circuits 20, 21, 22 and 23 produce the desired arithmetic result for the mode selected which result is indicated in FIG. 1 by output digit signals F0, F1, F2 and F3, each of which is comprised of 4 bits as shown in FIG. 1. Later on herein when particular preferred implementations are considered, the 4 bits of F0 will be designated as F0₀, F0₁, F0₂ and F0₃ (for example, see FIG. 2).

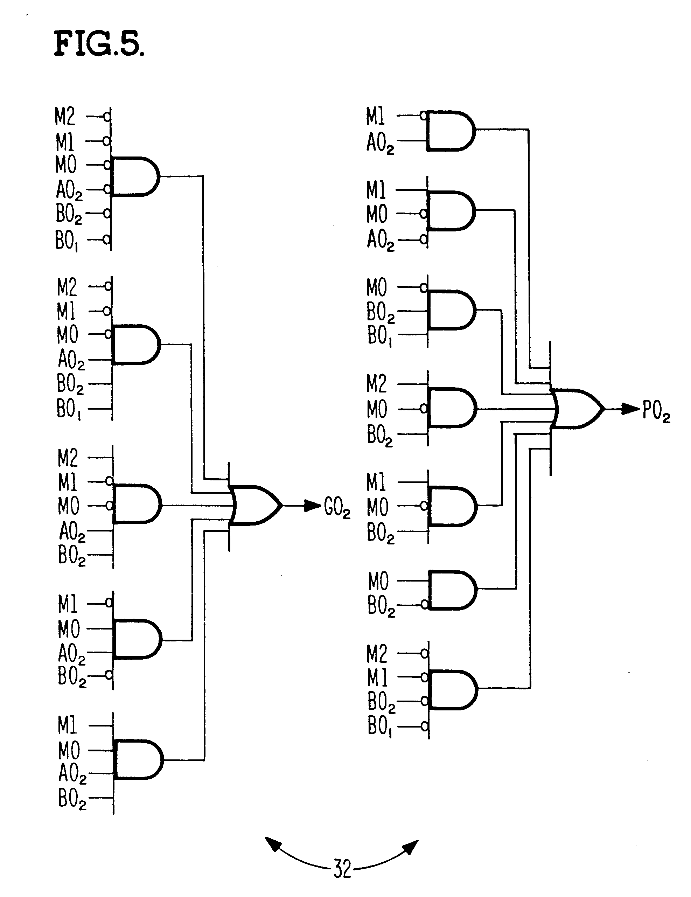

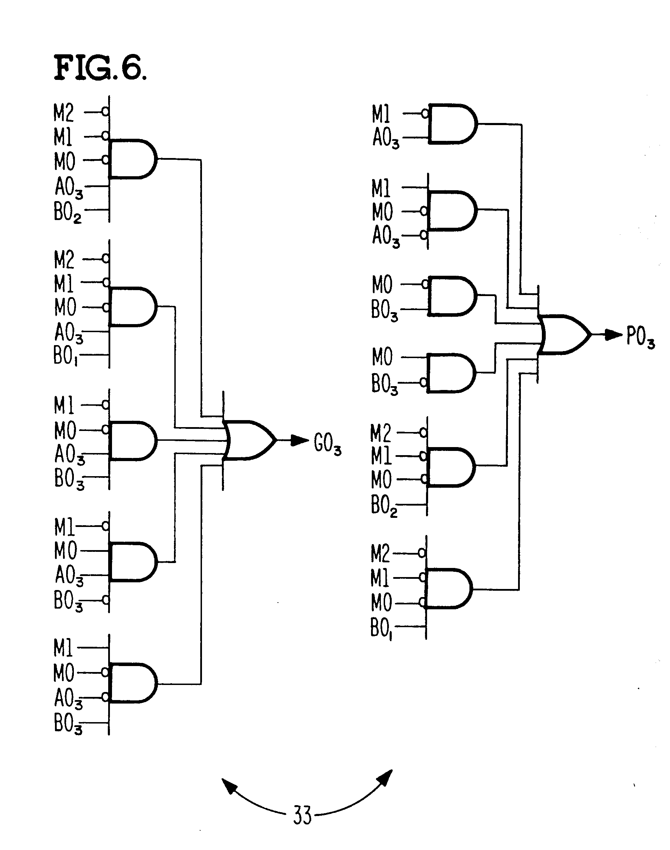

Reference is next directed to FIGS. 2-7 which illustrate how each of the digit adders 10, 11, 12 and 13 in FIG. 1 is preferably implemented in accordance with the invention. Since each of these digit adders can be implemented in a like manner, FIGS. 2-7 are directed only to the implementation of the digit adder 10. The implementation of the other digit adders 11, 12 and 13 shown in FIG. 1 will be readily evident from FIGS. 2-7.

Referring first to FIG. 2, illustrated therein is an overall implementation of the digit adder 10 in FIG. 1 which receives the zero digits A0 and B0 of the input operands. As shown, each of these zero digits A0 and B0 comprises four bits designated as A0₀, A0₁, A0₂, A0₃ and B0₀, B0₁, B0₂, B0₃, which are respectively applied to input logical circuits 30, 31, 32 and 33 along with the mode signals M0, M1 and M2 for use in producing respective pairs of propagate and generate signals P0₀, G0₀; P0₁, G0₁; P0₂, G0₂; and P0₃, G0₃. In addition, it is important to note that input logic circuit 32 also receives the bit signal B0₁ along with the bit signals A0₂ and B0₂, while input circuit 33 additionally receives both of the bit signals B0₁ and B0₂ along with the bit signals A0₃ and B0₃. This is done in order to permit the carry propagate and carry generate signals P0₂, G0₂ and P0₃, G0₃ produced by input logic circuits 32 and 33 to have values which take into account any inter-bit carries (or borrows in the case of subtraction) which may be produced by the correction signal during BCD operation, since it is these particular propagation and generate signals which can be changed as a result of the correction signal producing an inter-bit carry.

It is also to be noted in FIG. 2 that the mode signal M2 is not applied to the zero bit input logic circuit 30, since this bit will have the same value for both binary and BCD modes of operation.

In the particular preferred embodiment being described, the rules followed by each of the logic circuits 30, 31, 32 and 33 in FIG. 2 for producing the propagate and generate signals for an addition operation are as follows:
(1) A true or "1" propagate signal (P0₀, P0₁, P0₂ or P0₃) is produced if an input carry would produce an output carry taking into account (for BCD operation) the correction signal and any inter-bit carry which may be produced thereby -- otherwise, a false or "0" propagate signal is produced; and
(2) A true or "1" generate signal (G0₀, G0₁, G0₂ or G0₃) is produced if an output carry would be produced regardless of whether or not there is an input carry taking into account (for BCD operation) the correction signal and any inter-bit carry which may be produced thereby -- otherwise, a false or "0" generate signal is produced.

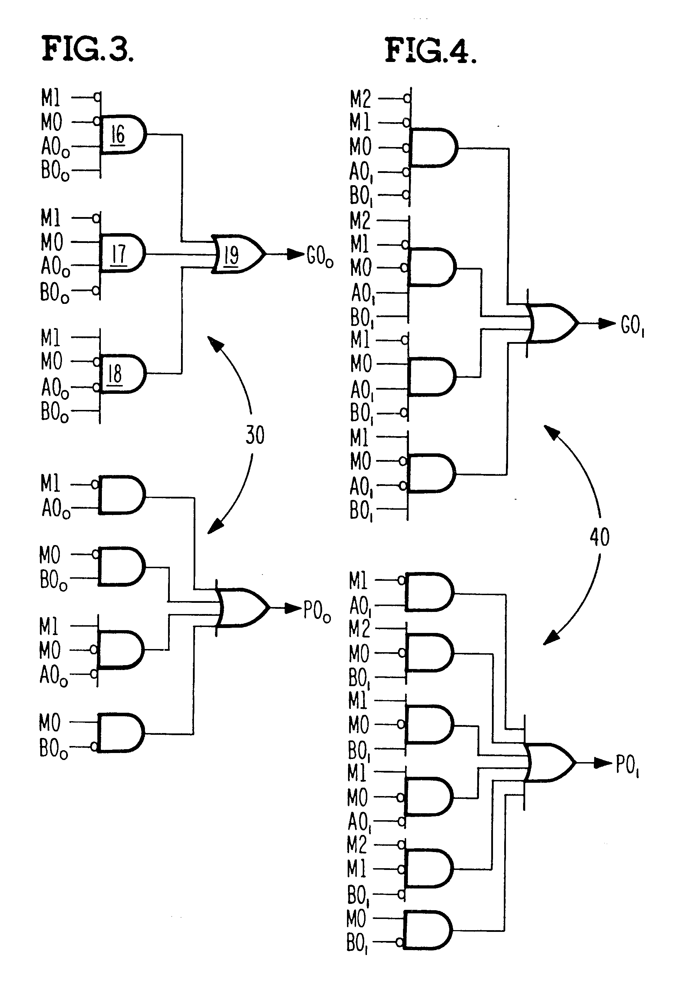

Continuing with the description of FIG. 2, it will be seen that the propagate and generate signals P0₀, G0₀; P0₁, G0₁; P0₂, G0₂; and P0₃, G0₃, respectively produced by the input logic circuits 30, 31, 32 and 33 are applied to conditional sum circuits 40, 41, 42 and 43 for producing the zero digit conditional sums S0-T and S0-F shown in FIG. 1 which, from FIG. 3, will be seen to be comprised of the pairs of bits S0₀-T, S0₀-F; S0₁-T, S0₁-F; S0₂-T, S0₂-F; and S0₃-T, S0₃-F. As pointed out previously, the "T" sums are those which would be obtained assuming the presence of an input carry, while the "F" sums are those which would be obtained assuming the absence of an input carry.

As also pointed out previously, these conditional sums take inter-bit carries into account as well as those produced by the correction signal during BCD operation. As illustrated in FIG. 2, this is accomplished by applying to each of the conditional sum circuits 40, 41, 42 and 43 the propagate and generate outputs produced by its respective logic input circuit 30, 31, 32 or 33 and also the propagate and generate outputs produced by all previous logic input circuits. Accordingly, the conditional sum circuit 40 receives signals P0₀ and G0₀, the conditional sum circuit 41 receives signals P0₀ and G0₀, as well as signals P0₁ and G0₁, the conditional sum circuit 42 receives signals P0₀, G0₀, P0₁ and G0₁, as well as signals P0₂ and G0₂, and the conditional sum circuit 43 receives signals P0₀, G0₀, P0₁, G0₁, P0₂, and G0₂ as well as signals P0₃ and G0₃.

Still with reference to FIG. 2, it will be seen that all of the propagate and generate signals, namely P0₀, G0₀, P0₁, G0₁, P0₂, G0₂, P0₃ and G0₃, are also applied to a digit propagate/generate circuit 50 which, concurrently with the producing of the conditional sums by the conditional sum circuits 40, 41, 42 and 43, produces the zero digit propagate signal PD0, the zero digit generate signal GD0 and the zero decimal mode signal DM0. The PD0 and GD0 signals are applied to the look-ahead carry circuit 30 shown in FIG. 1, while the decimal mode signal DM0 is applied to the zero digit output selection signal circuit 20 in FIG. 1.

Reference is next directed to FIGS. 3-6 which respectively illustrate particular preferred embodiments of the input logic circuits 30, 31, 32 and 33 shown in FIG. 2. As previously described, these input logic circuits 30, 31, 32 and 33 operate to the zero digit operand inputs A0₀, A0₁, A0₂, A0₃ and B0₀, B0₁, B0₂ and B0₃ to generate signals P0₀, G0₀; P0₁, G0₁; P0₂, G0₂, and P0₃, G0₃ for both binary and BCD operations in a manner such that, when BCD operation is required, the addition of an appropriate correction value is performed concurrently with the addition (or subtraction) of the input operands while taking into account any inter-bit carries (or borrows) that may be produced by the correction signal.

Considering FIGS. 3-6 more specifically, it will be seen that the BCD correction logic is merged with the binary arithmetic logic so that, for each of the input logic circuits 30, 31, 32 and 33, only a single level of AND gates having their outputs applied to respective common OR gates is required for producing the propagate and generate signals for BCD as well as binary operations (such as illustrated, for example, in FIG. 3 by AND gates 16, 17 and 18 feeding OR gate 19 for generating the signal G0₀). Since the number of gates through which a signal must pass is indicative of the delay of the path, it will be understood that only a 2 gate delay is introduced in order to produce each of the propagate and generate signals P0₀, G0₀; P0₁, G0₁; P0₂, G0₂; and P0₃, G0₃, which is the same as would normally be required if only binary arithmetic operations were to be performed.

The particular logical functions performed by each of the AND and OR gates shown in FIGS. 3-6 will readily be evident from the conventional AND and OR representations shown in these figures. This is also true for other like figures of the drawings. In this regard, it should be noted that, as is conventional, a "circle" input for an AND or OR gate indicates that the gate performs its logical operation on the inverse of the signal applied to such a "circle" input, while a "circle" output from an AND or OR gate indicates that the inverse of the gate output is obtained from such a "circle" output.

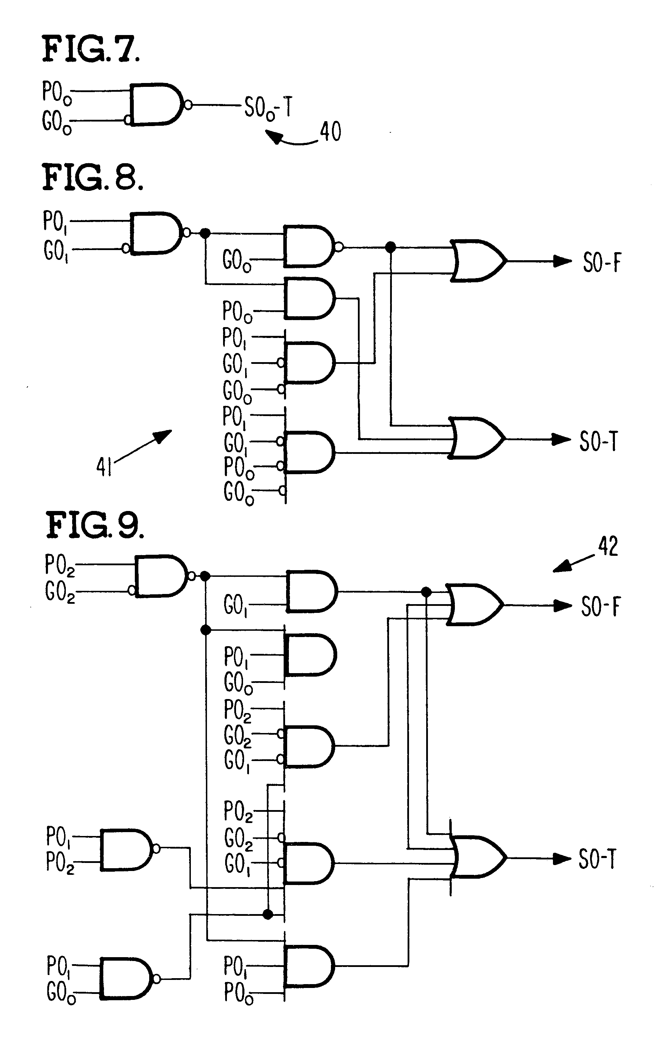

Reference is next directed to FIGS. 7-10 which respectively illustrate particular preferred embodiments of the conditional sum circuits 40, 41, 42 and 43 in FIG. 2 for producing the zero digit conditional sums S0₀-T, S0₀-F; S0₁-T, S0₁-F; S0₂-T, S0₂-F; S0₃-T, S0₃-F. As pointed out previously, these conditional sum circuits are not critical from a time viewpoint for the particular preferred embodiment being considered since the critical path is the look-ahead carry path whose operations are performed in parallel with the conditional sum operations. Thus, the operating speed of the conditional sum circuits 40, 41, 42 and 43 need only be equal or less than that required to produce the look-ahead carry which is relatively easy to accomplish in view of the relatively simpler logical operations required to be performed. Note that only the true sum S0₀-T is provided for the conditional sum circuit 40 since the false sum S0₀-F can readily be produced therefrom where required in later circuitry.

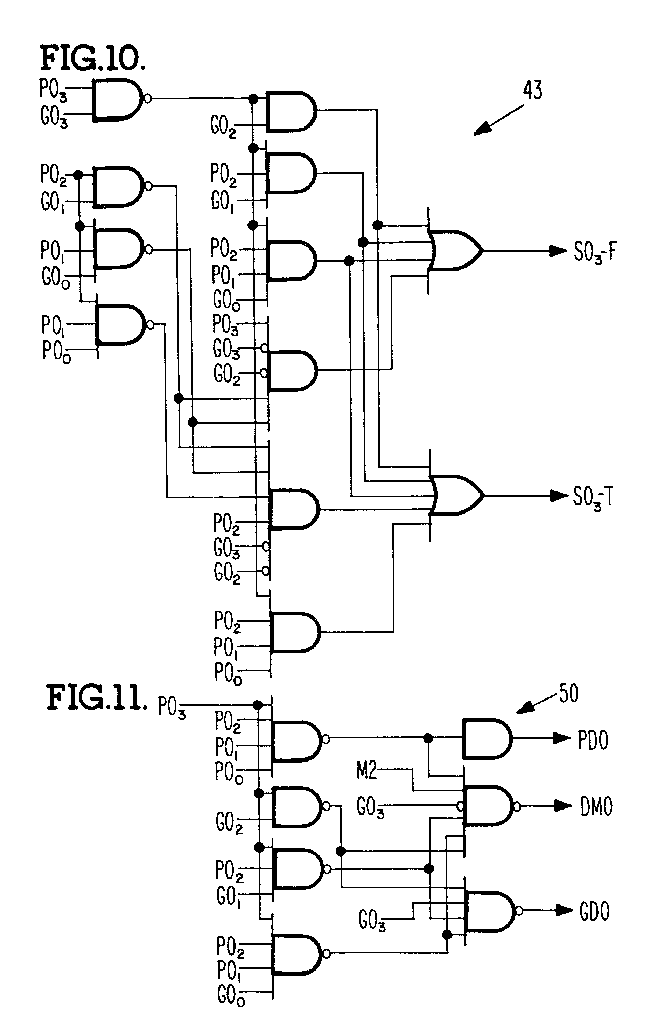

Reference is now directed to FIG. 11 which illustrates a particular preferred implementation of the digit propagate/generate circuit 50 illustrated in FIG. 2 which, concurrently with the producing of the conditional sums by the conditional sum circuits 40, 41, 42 and 43, produces the digit propagate and digit generate signals PD0 and GP0 as well as the zero digit decimal signal DM0. As shown in FIG. 1, the signals PD0 and GD0 are applied to the look-ahead carry circuit 30 in FIG. 11 (along with the other digit signals PD1, GD1, PD2, GD2, PD3 and GD3 produced by the other digit adders 11, 12 and 13 in FIG. 1), while the zero digit decimal signal DM0 is applied to the zero digit output selection circuit 20. Note in FIG. 11 that only a 2-gate delay path is required for producing the PD0, GD0 and DM0 signals. As will become evident, hereinafter, the production of the DM0 signal by the circuit 50 rather than later is advantageous in that it does not add to the overall delay time.

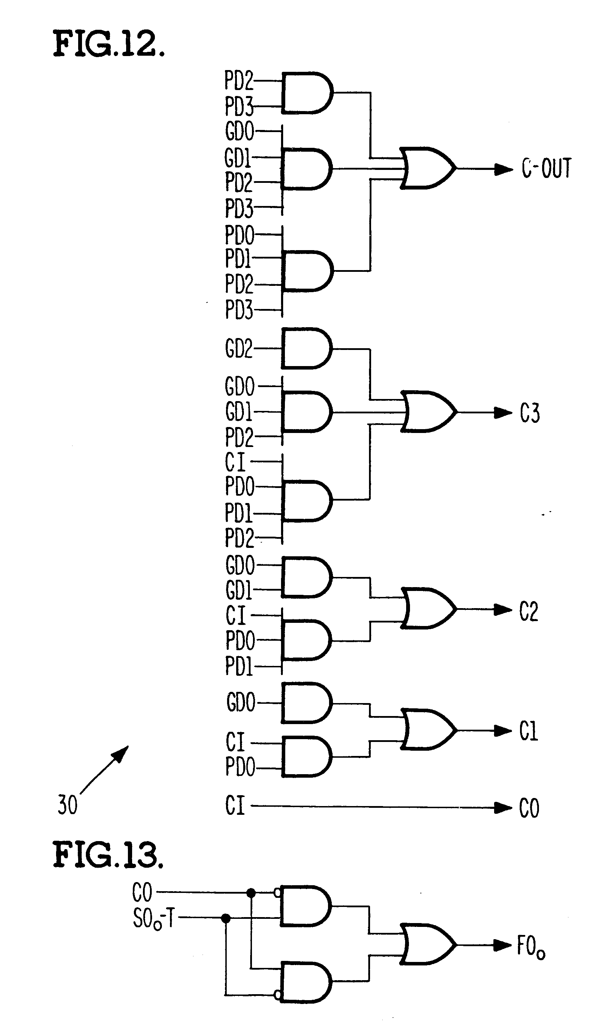

Having described with respect to FIGS. 2-11 a particular preferred implementation of the zero digit adder 10 in FIG. 1 (the other digit adders 11, 12, 13 and 14 having a like construction), attention is next directed to FIG. 12 which illustrates a particular preferred implementation of the look-ahead carry circuit 35 in FIG. 1 for producing look-ahead digit carries C0, C1, C2, C3 and an output carry C-OUT in response to an input carry CI and digit propagate and generate signals PD0, GD0; PD1, GD1; PD2, GD2; and PD3, GD3. Note in FIG. 12 that the zero digit look-ahead carry C0 is merely the carry-in CI and that a look-ahead carry-out C-OUT is also produced which may, for example, be applied to higher order digit if present.

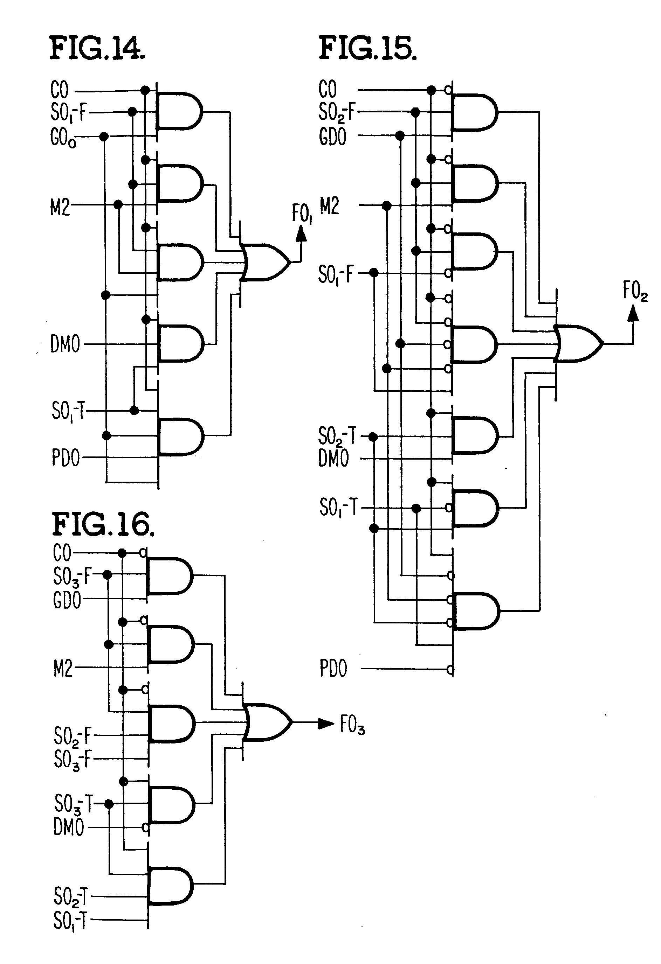

The remaining parts of FIG. 1 to be considered are the selection circuits 21, 22, 23 and 24 which produce the final arithmetic result represented by the digit output signals F0, F1, F2 and F3 (each of which comprises 4 bits as shown). As was the case for the digit adders 10, 11, 12 and 13, each of the selection circuits 21, 22, 23 and 24 may be of like construction. Accordingly, the particular preferred implementation of the zero digit selection circuit 20 shown in FIG. 1 for producing the F0 output (comprised of bits F0₀, F0₁, F0₂ and F0₃) should be considered as representative of the implementation of the other digit selection circuits 21, 22 and 23 in FIG. 1. Note in FIGS. 13-16 that the BCD correction logic is merged with the selection logic so that only a 2-gate delay is required for producing the bit output signals F0₀, F0₁, F0₂, F0₃ for both BCD and binary operations. In this regard, the advantage should now be recognized of having the decimal mode signals DM0, DM1, DM2 and DM3 produced concurrently with the respective digit propagate and generate signals PD0, GD0; PD1, GD1; PD2, GD2; and PD3, GD3 in each respective propagate/generate circuit, such as illustrated for the zero digit propagate/generate circuit 50 shown in FIGS. 2 and 11. Because they were previously produced, these decimal mode signals DM0, DM1, DM2 and DM3 are thus available at the inputs of the respective selection circuit inputs 20, 21, 22 and 23 as shown in FIG. 1 for use thereby without any added delay, as will be evident from FIGS. 13-16, whereby only a 2-gate overall delay is introduced by the selection circuits 20, 31, 22 and 23. Also note that, because each digit carry (which is C0 for selection circuit 20) is applied at the latest possible point -- that is, directly to its respective selection circuit -- the 2-gate delay of each selection circuit is all that is introduced from carry input to output. This is important since the digit carries C0, C1, C2 and C3 are normally the last to become available.

### Epilogue

Although the present invention has been described with respect to particular preferred implementations, it is to be understood that many variations in construction, arrangement, operation and use are possible within the scope of the invention.

For example, although the description has primarily referred to addition, it is to be understood that the detailed logic shown is also applicable to performing the subtraction operations A-B, B-A and 0-B by appropriate choice of the mode signals M0, M1 and M2 as mentioned earlier. Also, other types of logical functions (such as, for example, the Exclusive OR of A and B) could be provided by the addition of one or more mode signals along with appropriate implementation.

## Claims

1. Arithmetic-logic means for selectively performing binary or BCD operations on two multidigit operands (AO-A3, BO-B3), each digit (e.g. A0) consisting of four bits (A0₀, A0₁, A0₂, A0₃),
said arithmetic-logic means comprising:
a plurality of digital adders (10, 11, 12, 13) which plurality corresponds to the number of digits to be processed each digital adder receiving respective operand digits (Ai, Bi), and mode signals (MO, M1, M2) for selecting whether the operation is binary or BCD operation (M2) and whether an addition or subtraction of the operand digits is to be carried out (MO, M1), these mode signals being combined with individual operand digits
each digital adder producing
- a pair of propagate and generate signals (PDi, GDi),
- two digital conditional output signals (Si-T and Si-F), and
- a decimal mode signal (DMi) providing for the selective incorporation of an appropriate correction value in the logic of a succeeding output selection circuit (20, 21, 22, 23,
look ahead carry circuit means (35) which in response to all said propagate and generate signals (PDi, GDi) and a carry-in signal (CI) produces look-ahead digit carry signals (CO, C1, C2 and C3) and a carry-out signal (C-out),
a plurality of output selection circuits (20, 21, 22, 23) producing the desired arithmetic result for the mode selected from one of the two digital conditional output signals (Si-T and Si-F), thereby realising the correction simultaneously with the addition or subtraction of the input operands,
a digital adder (e.g. 10) consisting of four input logical circuits (30, 31, 32, 33) and a respective digit propagate and generate circuit (50), whereby
the first (30) and the second logical circuit (31) process bits Ai₀ and Bi₀ or Ai₁ and Bi₁ to produce Pi₀ and Gi₀ or Pi₁ and Gi₁ respectively, the third digital circuit (32) processes bits Bi₁, Ai₂ and Bi₂ to produce Pi₂ and Gi₂ and the fourth circuit (33) processes bits Bi₁, Bi₂, Ai₃ and Bi₃ to produce Pi₃ and Gi₃, bit Bi₁ for the third digital circuit and bits Bi₁ and Bi₂ for the fourth digital circuit being called inter-carry-bits.

2. Arithmetic logic means as claimed in claim 1 characterized in that said means responsive to said propagate and generate signals includes look-ahead carry circuit means (35, 30, 31, 32, 33) responsive to predetermined ones of said propagate and generate signals (PDi, GDi) for producing look-ahead carries, conditional sum circuit means (10, 11, 12, 13) operating in parallel with said look-ahead carry circuit means for concurrently producing conditional sum signals (SO-T, SO-F, ..., S3-T, S3-F) in response to said propagate and generate signals (PDi, GDi) which respectively assume the presence and absence of an input carry (C1) and which also take into account said ter-carry-bits, and output selection circuits (20, 21, 22, 23) responsive to said mode signal, said conditional sum signals and said look-ahead carries for producing said arithmetic result (F0, F1, F2, F3).

3. Arithmetic logic means as claimed in claim 1 or 2, characterized in that said BCD correction logic (DM0, DM1, DM3, 20, 21, 22, 23) in said input logic circuit means (30, 31, 32, 33) provides for the addition of six to one of said operands when BCD operation is indicated.

4. Arithmetic logic means as claimed in one of claims 1 to 3, characterized in that each operand (A, B) with a plurality of 4-bit digits, comprises said means responsive to said propagate and generate signals (PDi, GDi) including said digit propagate/generate circuit means (50) for producing digit propagate and digit generate signals in response to said propagate and generate signals, and said look-ahead carry means (35) which is responsive to said digit propagate and digit generate signals (PDi, GDi) and an input carry (C1).

5. Arithmetic logic means as claimed in one of claims 1 to 4, characterized in that said selection circuit means includes selection logic and BCD correction logic (DM0, DM1, DM2, DM3, 20, 21, 22, 23) which are merged so that, when BCD operation is indicated, correction logic operations are performed concurrently with selection operations.

6. Arithmetic logic means as claimed in one of claims 1 to 5, characterized in than the BCD correction logic (DM0, DM1, DM2, DM3, 20, 21, 22, 23) in said input logic circuit means provides for the addition of six to one of said operands when BCD operation is indicated, and wherein the BCD correction logic in said selection circuit means provides for the subtraction of six from the sum when required to provide a proper BCD value.

7. Arithmetic logic means as claimed in one of claims 1 to 6, characterized in that said input logic circuit means (10, 11, 12, 13) provides for the production of said propagate and generate signals (PDO, GDO, PD3, GD3) in response to said input operands using only two levels of gates.

8. Arithmetic logic means as claimed in one of claims 1 to 7, characterized in that said selection circuit means (20, 21, 22, 23), providing for the production of said arithmetic result in response to said look-ahead carry signals (C0-C3) and said conditional sum signals, has a mode signal and an input carry signal using only two levels of gates.

## Patentansprüche

1. Logische Rechenmittel für selektive Durchführung von binären oder BCD-Operationen an zwei Multidigit-Operanden (A0-A3, B0-B3), wobei jedes Digit (z.B. A0) vier Bits (A0₀, A0₁, A0₂, A03) aufweist und die logischen Rechenmittel umfassen:
mehrere Digitaladdierer (10, 11, 12, 13), deren Anzahl der Zahl der zu verarbeitenden Digits entspricht, wobei jeder Digitaladdierer jeweilige Operandendigits (Ai, Bi) empfängt, und Betriebsartsignale (M0, M1, M2) um auszuwählen, ob die Operation eine binäre oder eine BCD-Operation (M2) ist und ob eine Addition oder Subtraktion der Operandendigits durchzuführen ist (M0, M1), wobei diese Betriebsartsignale mit individuellen Operandendigits kombiniert sind,
wobei jeder Digitaladdierer erzeugt:
- ein Paar Ausbreitungs- und Generierungssignale (BDi, GDi),
- zwei digitale Konditionalausgangssignale (Si-T und Si-F), und
- ein Dezimal-Betriebsartsignal (DMi), das die selektive Einführung eines geeigneten Korrekturwertes in die Logik des darauffolgenden Ausgangsauswahlkreises (20, 21, 22, 23) besorgt,
Parallelübertragschaltkreismittel (35), die als Reaktion auf alle Ausbreitungs- und Generierungssignale (PDi, GDi) und auf ein Eingabeübertragssignal (CI) digitale Parallelübertragssignale (C0, C1, C2 und C3) und ein Ausgabeübertragsignal (C-out) erzeugen,
eine Vielzahl an Ausgangsauswahlschaltkreisen (20, 21, 22, 23), die das gewünschte Rechenergebnis für den ausgewählten Betriebsmodus für eines der zwei digitalen Konditionalausgangssignale (Si-T und Si-F) erzeugen, wobei die Korrektur gleichzeitig mit der Addition und der Subtraktion der Eingangsoperanden realisiert wird,
einen Digitaladdierer (z.B. 10), der vier Eingangslogikschaltkreise (30, 31, 32, 33) und einen jeweiligen Digitausbreitungs- und Generierungsschaltkreis (50) aufweist,
wobei der erste (30) und der zweite Logikschaltkreis (31) die Bits Ai₀ und Bi₀ oder Ai₁ und Bi₁ verarbeiten, um Pi₀ und Gi₀ oder Pi₁ und Gi₁ zu erzeugen, der dritte Digitalschaltkreis (32) die Bits Bi₁, Ai₂ und Bi₂ verarbeitet, um Pi₂ und Gi₂ zu erzeugen und der vierte Schaltkreis (33) die Bits Bi₁, Bi₂, Ai₃ und Bi₃ verarbeit, um Pi₃ und Gi₃ zu erzeugen, wobei Bit Bi₁ für den dritten Digitalschaltkreis und die Bits Bi₁ und Bi₂ für den vierten Digitalschaltkreis als sogenannte Zwischenübertragsbits bezeichnet werden.

2. Logische Rechenmittel nach Anspruch 1, dadurch gekennzeichnet, daß diese Mittel in reaktion auf die Ausbreitungs- und Generierungssignale, Parallelübertragsschaltkreismittel (35, 30, 31, 32, 33) umfassen, die auf einzelne bestimmte Signale der Ausbreitungs- und Generierungssignale (PDi, GDi) zur Erzeugung von Parallelüberträgen reagieren, Konditionalsummenschaltkreismittel (10, 11, 12, 13), die parallel zu den Parallelübertragsschaltkreismitteln arbeiten zur gleichzeitigen Erzeugung von Konditionalsummensignalen (S0-T, S0-F, ..., S3-T, S3-F) in Reaktion auf die Ausbreitungs- und Generierungssignale (PDi, GDi), die jeweils das Vorhandensein und das Fehlen eines Eingabeübertrags (C1) vorausetzen und außerdem Zwischenbitüberträge berücksichtigen, und Ausgangsauswahlschaltkreise (20, 21, 22, 23), die auf das Betriebsartsignal, die Konditionalsummensignale und die Parallelüberträge zur Erzeugung des Rechenergebnisses (F0, F1, F2, F3) reagieren.

3. Logische Rechenmittel nach Anspruch 1 oder 2, dadurch gekennzeichnet, daß die BCD-Korrekturlogik (DM0, DM1, DM3, 20, 21, 22, 23) in den Eingangslogikschaltkreismitteln (30, 31, 32, 33) die Addition von sechs zu einem der Operanden ausführt, wenn eine BCD-Operation angezeigt ist.

4. Logische Rechenmittel nach einem der Ansprüche 1-3, dadurch gekennzeichnet, daß jeder Operand (A, B) mit mehreren 4-Bit-Digits die Mittel umfaßt, die auf Ausbreitungs- und Generierungssignale (PDi, GDi) reagieren, einschließlich der Digit-Ausbreitung/Generierung-Schaltkreismittel (50) zur Erzeugung der Digitausbreitungs- und Digitgenerierungssignale in Reaktion auf die Ausbreitungs- und Generierungssignale, und die auf Parallelübertragsmittel (35), die die Digitausbreitungs- und Digitgenerierungssignale (PDi, GDi) und einen Eingangsübertrag (C1) reagieren.

5. Logische Rechenmittel nach einem der Ansprüche 1-4, dadurch gekennzeichnet, daß die Auswahlschaltkreismittel Auswahllogik und BCD-Korrekturlogik (DM0, DM1, DM2, DM3, 20, 21, 22, 23) umfassen, die derart kombiniert sind, daß Korrekturlogikoperationen gleichzeitig mit Auswahloperationen durchgeführt werden, wenn eine BCD-Operation angezeigt ist.

6. Logische Rechenmittel nach einem der Ansprüche 1-5, dadurch gekennzeichnet, daß die BCD-Korrekturlogik (DM0, DM1, DM2, DM3, 20, 21, 22, 23) in den Eingangslogikschaltkreismitteln für die Addition von sechs zu einem der Operanden sorgt, wenn eine BCD-Operation angezeigt ist, und daß die BCD-Korrekturlogik in den Auswahlschaltkreismitteln die Subtraktion von sechs von der Summe besorgt, wenn es erforderlich ist, einen richtigen BCD-Wert zu liefern.

7. Logische Rechenmittel nach einem der Ansprüche 1-6, dadurch gekennzeichnet, daß die Eingangslogikschaltkreismittel (10, 11, 12, 13) für die Erzeugung von Ausbreitungs- und Generierungssignalen (PD0, GD0, PD3, GD3) sorgen in Reaktion auf Eingabeoperanden, wobei nur zwei Gatterstufen verwendet werden.

8. Logische Rechenmittel nach einem der Ansprüche 1-7, dadurch gekennzeichnet, daß die Auswahlschaltkreismittel (20, 21, 22, 23), welche zur Erzeugung von Rechenergebnissen in Reaktion auf die Parallelübertragssignale (C0-C3) und der Konditionalsummensignale ein Betriebsartsignal und ein Eingabeübertragssignal aufweist, wobei nur zwei Gatterstufen verwendet werden.

## Revendications

1. Moyens arithmétiques-logiques pour effectuer sélectivement des opérations binaires ou DCB sur deux opérandes à plusieurs chiffres (A0-A3, B0-B3), chaque chiffre (par exemple A0) étant composé de quatre bits (A0₀, A0₁, A0₂, A0₃), lesdits moyens arithmétiques-logiques comprenant :
une pluralité d'additionneurs numériques (10, 11,12,13), cette pluralité correspondant au nombre de chiffres à traiter, chaque additionneur numérique recevant des chiffres d'opérande respectifs (Ai, Bi), et des signaux de mode (M0, M1, M2) pour choisir si l'opération est une opération binaire ou une opération DCB (M2) et si une addition ou une soustraction des chiffres d'opérande doit être effectuée (M0,M1), ces signaux de mode étant combinés avec les chiffres d'opérande individuels, chaque additionneur numérique produisant
- une paire de signaux de propagation et de génération(PDi, GDi),
- deux signaux de sortie conditionnelle numérique (Si-T et Si-F), et
- un signal de mode décimal (DMi) assurant l'incorporation sélective d'une valeur de correction appropriée dans la logique d'un circuit de sélection de sortie suivant (20,21,22,23),
un circuit de report à anticipation (35) qui produit, en réponse à tous lesdits signaux de propagation et de génération (PDi, GDi) et à un signal d'entrée de report (CI), des signaux de report de chiffre à anticipation (C0, C1, C2 et C3) et un signal de sortie de report(C-OUT),
une pluralité de circuits de sélection de sortie (20,21,22,23) produisant le résultat arithmétique désiré pour le mode choisi, à partir d'un des deux signaux de sortie conditionnelle numérique (Si-T et Si-F), réalisant ainsi la correction simultanément à l'addition ou à la soustraction des opérandes d'entrée,
un additionneur numérique (par exemple 10) consistant en quatre circuits logiques d'entrée (30,31,32, 33), et un circuit de propagation et génération de chiffre respectif (50),
de sorte que le premier (30) et le deuxième (31) circuits logiques traitent les bits Ai₀ et Bi₀ ou Ai₁ et Bi₁ pour produire Pi₀ et Gi₀ ou Pi₁ et Gi₁ respectivement, le troisième circuit numérique (32) traite les bits Bi₁, Ai₂ et Bi₂ pour produire Pi₂ et Gi₂, et le quatrième circuit (33) traite les bits Bi₁, Bi₂, Ai₃ et Bi₃ pour produire Pi₃ et Gi₃, le bit Bi₁ pour le troisième circuit numérique et les bits Bi₁ et Bi₂ pour le quatrième circuit numérique étant appelés bits de report interne.

2. Moyens arithmétiques-logiques suivant la revendication 1, caractérisés en ce que lesdits moyens répondant auxdits signaux de propagation et de génération comprennent des circuits de report par anticipation (35, 30,31,32,33) qui répondent à des signaux prédéterminés des dits signaux de propagation et de génération (PDi, GDi) pour produire des reports par anticipation, des circuits de somme conditionnelle (10,11,12,13) fonctionnant en parallèle avec lesdits circuits de report par anticipation pour produire simultanément des signaux de somme conditionnelle (S0-T, S0-F, ..., S3-T, S3-F), en réponse aux dits signaux de propagation et de génération (PDi, GDi) qui supposent respectivement la présence et l'absence d'un report d'entrée (C1), et qui prennent également en compte lesdits bits de report interne, et des circuits de sélection de sortie (20,21,22,23) qui répondent audit signal de mode, auxdits signaux de somme conditionnelle et auxdits reports par anticipation pour produire ledit résultat arithmétique (F0, F1, F2, F3).

3. Moyens arithmétiques-logiques suivant la revendication 1 ou 2, caractérisés en ce que ladite logique de correction DCB (DM0, DM1, DM3, 20, 21, 22, 23) dans lesdits circuits logiques d'entrée (30,31,32,33) assure l'addition de six, à un desdits opérandes, lorsqu'une opération DCB est indiquée.

4. Moyens arithmétiques-logiques suivant une des revendications 1 à 3, caractérisés en ce que chaque opérande (A,B) comprend une pluralité de chiffres à 4 bits, lesdits moyens répondant auxdits signaux de propagation et de génération (PDi, GDi) comprennent ledit circuit de propagation/génération de chiffre (50) pour produire des signaux de propagation de chiffre et de génération de chiffre en réponse auxdits signaux de propagation et de génération, et lesdits moyens de report par anticipation (35) qui répondent auxdits signaux de propagation de chiffre et de génération de chiffre (PDi, GDi) et à un report d'entrée (C1).

5. Moyens arithmétiques-logiques suivant une des revendications 1 à 4, caractérisés en ce que ledit circuit de sélection comprend une logique de sélection et une logique de correction DCB (DM0, DM1, DM2, DM3, 20, 21, 22, 23) qui sont fusionnées de sorte que, lorsqu'une opération DCB est indiquée, les opérations logiques de correction sont effectuées simultanément aux opérations de sélection.

6. Moyens arithmétiques-logiques suivant une des revendications 1 à 5, caractérisés en ce que la logique de correction DCB (DM0, DM1, DM2, DM3, 20, 21, 22, 23) dans lesdits circuits logiques d'entrée effectue l'addition de six, à un desdits opérandes, lorsqu'une opération DCB est indiquée, et la logique de correction DCB dans lesdits circuits de sélection effectue la soustraction de six de la somme lorsque c'est nécessaire pour fournir une valeur DCB correcte.

7. Moyens arithmétiques-logiques suivant une des revendications 1 à 6, caractérisés en ce que lesdits circuits logiques d'entrée(10,11,12,13)assurent la production desdits signaux de propagation et de génération (PD0, GD0,PD3,GD3) en réponse auxdits opérandes d'entrée, en utilisant seulement deux niveaux de portes .

8. Moyens arithmétiques-logiques suivant une des revendications 1 à 7, caractérisés en ce que lesdits circuits de sélection (20,21,22,23), assurant la production dudit résultat arithmétique en réponse auxdits signaux de report par anticipation (C0-C3) et auxdits signaux de somme conditionnelle, ont un signal de mode et un signal de report d'entrée, au moyen de deux niveaux de portes seulement.
